# EUROPÄISCHE PATENTANMELDUNG

(11) **EP 4 674 593 A1**
(43) Veröffentlichungstag der Anmeldung: **07.01.2026**
(21) Anmeldenummer: 24186075.8
(22) Anmeldetag: 02.07.2024
(51) Int. Cl.: B29C 49/04, B29C 49/20, B29K 23/00, B29L 31/00

(54) **VERFAHREN ZUR HERSTELLUNG EINES BLASFORMTEILS UND BLASFORMTEIL**

(71) Anmelder: TI Automotive Technology Center GmbH, 76437 Rastatt (DE)
(72) Erfinder: Bermejo, Javier, 31151 Obanos (Navarra) (ES); Leipold, Stefan, 67470 Seltz (FR); Lindow, Manuel, 76593 Gernsbach (DE); Iriarte, Mikel, 76437 Rastatt (DE); Kizilay, Irfan, 68799 Reilingen (DE)
(74) Vertreter: Reiser & Partner Patentanwälte mbB

(57) **Zusammenfassung**

Verfahren zur Herstellung eines Blasformteils (1), umfassend die Schritte:
- Einfügen eines Vorformlings (10) aus thermoplastischem Werkstoff in eine Blasform (2),
- Einfügen eines Funktionselementes (3) in die Blasform (2), wobei das Funktionselement (3) durch eine Haltevorrichtung (4) lagerichtig in der Blasform (2) gehalten ist, wobei die Haltevorrichtung (4) einen Halter (5) aufweist, der das Funktionselement (3) teilweise aufnimmt, wobei der Halter (5) einen Vorsprung (6) aufweist, der sich in Längsrichtung erstreckt, wobei das Funktionselement (3) auf der dem Vorformling (10) zugewandten Seite einen in radialer Richtung verlaufenden Flansch (7) aufweist,
- Schließen der Blasform (2),
- Durchführen des Blasformvorgangs, wobei sich der Vorformling (10) an den Flansch (7) des Funktionselementes (3) anlegt und einen Grundkörper (8) ausbildet.

## Beschreibung

Die Erfindung betrifft ein Verfahren zur Herstellung eines Blasformteils, bei welchem ein Funktionselement in eine Blasform eingefügt wird, wobei das Funktionselement durch eine Haltevorrichtung lagerichtig in der Blasform gehalten wird, wobei die Haltevorrichtung einen Halter aufweist, der das Funktionselement teilweise aufnimmt, ein Vorformling aus thermoplastischem Werkstoff in die Blasform eingefügt wird, die Blasform geschlossen und der Blasformvorgang durchgeführt wird, wobei sich der Vorformling an das Funktionselement anlegt und einen Grundkörper ausbildet.

Beim Blasformverfahren wird ein schlauchförmiger oder flächiger Vorformling in eine Blasform eingebracht, wobei sich die Blasformwerkzeuge der Blasform außenseitig an den Vorformling anlegen und die Außenkontur des Blasformteils vorgeben. Die Blasform umfasst zumeist zwei Blasformwerkzeuge mit einer Kavität, die relativ zueinander verfahrbar sind, wobei der Vorformling beim Schließen der Blasformwerkzeuge an den Randbereichen der Kavität der Blasformwerkzeuge abgepresst wird.

Durch das Blasformverfahren ist die Herstellung von Blasformteilen mit einer großen Formenvielfalt möglich, insbesondere ist die Herstellung komplex geformter, nichtsymmetrischer, hinterschnittiger Bauteile in einem Arbeitsschritt möglich.

Aus der EP 3 919 299 A1 ist es bekannt, im Zuge des Blasformverfahrens ein Funktionselement in das Blasformteil einzubringen. Dabei wird das Funktionselement über eine Haltevorrichtung lagerichtig in der Blasform gehalten und während des Blasformvorgangs fest mit dem Vorformling bzw. dem aus dem Vorformling entstehenden Blasformteil verbunden.

Die Funktionselemente sind dabei häufig aus thermoplastischem Material ausgebildet und im Spritzgießverfahren hergestellt. Dabei ist problematisch, dass aus Kunststoff hergestellte Spritzgießteile während des Aushärtens im Anschluss an das Spritzgießen einer Schrumpfung unterliegen, sodass insbesondere großformatige Funktionselemente Maßungenauigkeiten mit relativ großen Fertigungstoleranzen aufweisen. Während des Blasformvorgangs kann sich dabei das Problem ergeben, dass zwischen dem Funktionselement und dem Vorformling ein unerwünschter Spalt entsteht, was im Ergebnis zu einem fehlerhaften Blasformteil führen kann. Des Weiteren kann sich die Restwandung des Vorformlings zu sehr reduzieren.

Der Erfindung liegt die Aufgabe zugrunde, ein Verfahren zur Herstellung eines Blasformteils bereitzustellen, welches eine einfache und kostengünstige Herstellung eines mit einem Funktionselement versehenen Blasformteils ermöglicht.

Diese Aufgabe wird mit den Merkmalen der Ansprüche 1 und 10 gelöst. Vorteilhafte Ausgestaltungen nehmen jeweils darauf Bezug.

Das erfindungsgemäße Verfahren zur Herstellung eines Blasformteils umfasst die Schritte:
- Einfügen eines Vorformlings aus thermoplastischem Werkstoff in eine Blasform,
- Einfügen eines Funktionselementes in die Blasform, wobei das Funktionselement durch eine Haltevorrichtung lagerichtig in der Blasform gehalten ist, wobei die Haltevorrichtung einen Halter aufweist, der das Funktionselement teilweise aufnimmt, wobei der Halter einen Vorsprung aufweist, der sich in Längsrichtung erstreckt, wobei das Funktionselement auf der dem Vorformling zugewandten Seite einen in radialer Richtung verlaufenden Flansch aufweist,
- Schließen der Blasform,
- Durchführen des Blasformvorgangs, wobei sich der Vorformling an den Flansch des Funktionselementes anlegt und einen Grundkörper ausbildet.

Durch den Flansch des Funktionselementes, der sich in radialer Richtung erstreckt, kann gewährleistet werden, dass das Funktionselement den Vorformling und den aus dem Vorformling entstehenden Grundkörper entlang der umlaufenden, dem Vorformling zugewandten Kante anliegend berührt, sodass durch den Blasformvorgang eine feste stoffschlüssige und/oder formschlüssige Verbindung zwischen Blasformteil und Funktionselement erzielt werden kann. Der in radialer Richtung verlaufende Flansch ist insbesondere geeignet, Fertigungstoleranzen des Funktionselementes auszugleichen, sodass auch Funktionselemente verbaut werden können, die durch Schrumpfungsprozesse eine verringerte Maßhaltigkeit aufweisen. Dies ermöglicht die Bereitstellung kostengünstig hergestellter Funktionselemente mit verringerten Anforderungen an die Toleranz.

Vorzugsweise legt sich der Flansch des Funktionselementes während des Blasformvorgangs an die Oberfläche des Vorformlings an, sodass ein flächiger Kontakt zwischen Funktionselement und Vorformling erfolgt. Dadurch ist eine besonders stabile Befestigung von Funktionselement und Grundkörper ermöglicht.

Vorzugsweise verbindet sich das Funktionselement stoffschlüssig mit dem Grundkörper. Besonders bevorzugt erfolgt die stoffschlüssige Verbindung zwischen Funktionselement und Grundkörper während des Blasformvorgangs, bei dem aus dem Vorformling der Grundkörper ausgebildet wird. Während des Blasformvorgangs wird der aus thermoplastischem Werkstoff bestehende Vorformling auf eine Temperatur oberhalb der Schmelztemperatur erwärmt, sodass während des Blasformvorgangs stoffschlüssige Verbindungen ohne weitere Zuschlagstoffe erzielt werden können. In Abhängigkeit der Formgebung von Funktionselement und Grundkörper kann sich das Funktionselement auch formschlüssig mit dem Grundkörper verbinden. Denkbar ist auch eine kombinierte stoffschlüssige und formschlüssige Verbindung, wobei eine kombinierte Verbindung besonders robust ist.

Der Flansch des Funktionselementes kann sich über die Stirnseite des Vorsprungs des Halters erstrecken. Der Halter umfasst das Funktionselement vorzugsweise radial außenseitig und stützt das Funktionselement lagerichtig innerhalb der Blasform. Dabei ist es wichtig, dass das Funktionselement nach Abschluss des Blasformvorgangs einfach von dem Halter entformbar ist. Wenn sich der Flansch des Funktionselementes über die Stirnseite des Vorsprungs des Halters erstreckt, ist sichergestellt, dass der Flansch zur Anlage an den Vorformling gelangt. Weiterhin ist sichergestellt, dass der Halter von dem Vorformling beabstandet bleibt. Eine unerwünschte zu starke Reduzierung der Restwandstärke kann dabei vermieden werden. Dabei ist insbesondere vorteilhaft, dass die im Bereich der Verbindung erzielbare Restwandstärke den Mindestanforderungen an die Druckbeständigkeit des Grundkörpers entsprechen kann.

Vorzugsweise ist das Funktionselement aus thermoplastischem Werkstoff ausgebildet, sodass das Funktionselement einfach und kostengünstig herstellbar ist. Alternativ kann das Funktionselement abschnittsweise aus nicht-thermoplastischem Material ausgebildet und mit Verbindungselementen aus thermoplastischem Werkstoff ausgerüstet sein. Das Funktionselement kann dabei auch mechanisch angebunden sein.

Vorzugsweise ist das Funktionselement als Spritzgussteil ausgebildet. Das Spritzgießverfahren ermöglicht die Herstellung von Funktionselementen in großer Stückzahl zu geringen Kosten.

Das Blasformteil kann eine Anordnung für den Transport von Medien sein. Dabei kann der Vorformling einen Grundkörper mit mindestens einem Strömungskanal ausbilden, wobei das Funktionselement mit dem Strömungskanal strömungsleitend in Verbindung steht.

In diesem Zusammenhang ist es insbesondere denkbar, dass das Blasformteil eine Rohranordnung ausbildet, in der Temperiermedien zu verschiedenen Komponenten eines Elektrofahrzeugs geleitet werden können, beispielsweise den Akkumulatoren oder auch einem Wärmetauscher zum Temperieren der Fahrgastzelle. Sowohl die Akkumulatoren als auch die Fahrgastzelle müssen in Abhängigkeit der Umgebungstemperatur entweder gekühlt oder erwärmt werden. Durch die Rohranordnung können Temperiermedien mit unterschiedlichen Temperaturen verteilt und verschiedenen Komponenten zugeleitet werden. Das Funktionselement kann dabei ausgerüstet sein, entweder Zustandsgrößen des Temperiermediums zu erfassen oder das Temperiermedium zu beeinflussen. In diesem Zusammenhang ist es denkbar, dass das Funktionselement ein Ventil, eine interne Kanalkreuzung, ein Pumpenanschluss, eine externer Leitungsabgang, ein Sensoranschluss oder dergleichen ist.

Die Aufgabe wird auch durch ein Blasformteil gelöst, umfassend einen im Blasformverfahren hergestellten Grundkörper aus thermoplastischem Werkstoff, in dem wenigstens ein Strömungskanal ausgebildet ist und zumindest ein Funktionselement, welches stoffschlüssig und/oder formschlüssig mit dem Grundkörper verbunden ist, wobei das Funktionselement mit dem Strömungskanal strömungsleitend verbunden ist und wobei das Funktionselement einen Flansch aufweist, der an dem Grundkörper anliegt.

Durch den Flansch ergibt sich ein flächiger Kontakt des Funktionselementes an den Grundkörper, was im Vergleich zu einem linienförmigen Kontakt, beispielsweise entlang der Stirnseite eines Rohres, eine stabilere Anbindung des Funktionselementes an den Grundkörper ermöglicht. Des Weiteren kann der Flansch Toleranzen ausgeglichen, die das Funktionselement fertigungsbedingt aufweist.

Das Funktionselement kann einen Axialflansch aufweisen, wobei der Flansch vorzugsweise auf der dem Grundkörper zugewandten Seite aus dem Axialflansch ausgebildet ist. Dabei erstreckt sich der Flansch vorzugsweise in radialer Richtung.

Das Funktionselement ist vorzugsweise als Spritzgussteil aus thermoplastischem Werkstoff ausgebildet und das Blasformteil bildet eine Anordnung für den Transport von Medien.

In den nachfolgenden Figuren werden das Verfahren und das durch das Verfahren hergestellte Blasformteil näher erläutert. Die Figuren zeigen, jeweils schematisch:
Fig. 1 das Blasformverfahren;
Fig. 2 im Detail den Grundkörper, das Funktionselement und den Halter nach Abschluss des Blasformvorgangs;
Fig. 3 eine Anordnung für den Transport von Medien.

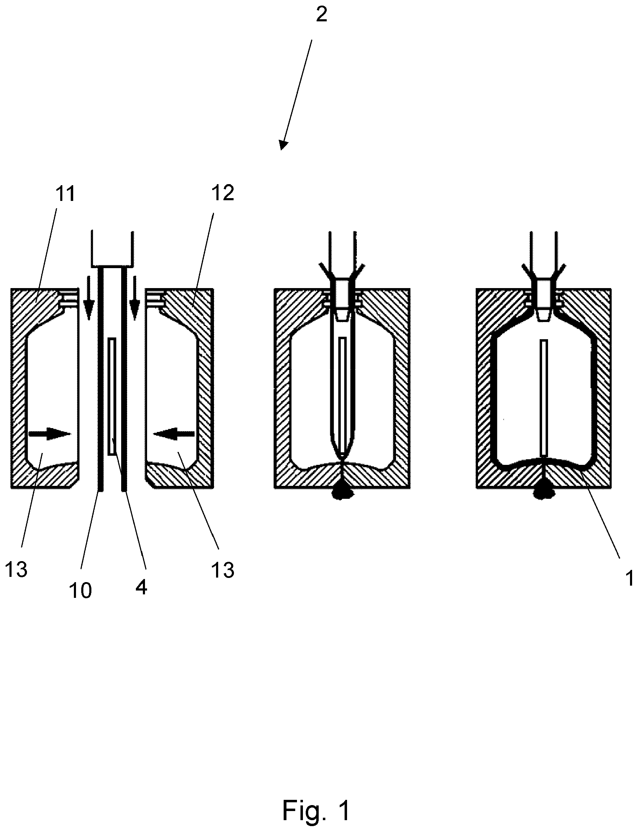

Fig. 1 zeigt eine Blasform 2 mit zueinander verfahrbaren Blasformwerkzeugen 11, 12. In die Blasformwerkzeuge 11, 12 ist jeweils eine Kavität 13 eingebracht, welche die Außenkontur des durch das Blasformverfahren hergestellten Blasformteils 1 vorgibt.

Zur Herstellung des Blasformteils 1 wird ein Vorformling 10 aus thermoplastischem Werkstoff in die Blasform eingefügt, ein Funktionselement 3 an einer Haltevorrichtung 4 befestigt und samt Haltevorrichtung in die Blasform eingefügt, wobei das Funktionselement 3 durch die Haltevorrichtung 4 lagerichtig in der Blasform gehalten ist. Die Haltevorrichtung 4 weist einen Halter 5 auf, der das Funktionselement 3 teilweise aufnimmt. Der Halter 5 weist einen Vorsprung 6 auf, der sich in Längsrichtung erstreckt und das Funktionselement 3 weist auf der dem Vorformling 10, bzw. dem Grundkörper 8 zugewandten Seite einen in radialer Richtung verlaufenden Flansch 7 auf.

Der Vorformling 10 ist ein extrudierter, schlauchförmiger Körper aus polymerem Werkstoff, der für das Blasformverfahren auf eine Temperatur oberhalb der Schmelztemperatur erwärmt wird. Alternativ kann der Vorformling 10 flächig ausgebildet sein.

Für das Blasformen wird die Blasform 2 geschlossen, indem die Blasformwerkzeuge 11, 12 aufeinander zubewegt werden und der Blasformvorgang wird durchgeführt. Durch den Blasformvorgang legt sich der Vorformling 10 an die Kavität 13 der Blasformwerkzeuge 11, 12 und an den Flansch 7 des Funktionselementes 3 an und bildet einen Grundkörper 8 aus.

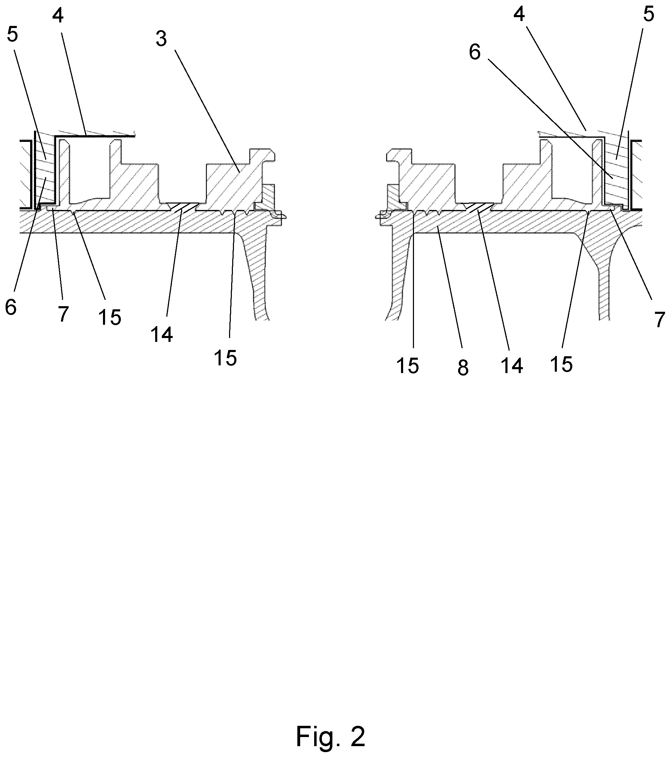

Fig. 2 zeigt im Schnitt den durch das in Fig. 1 beschriebene Verfahren hergestellte Blasformteil 1. Es ist zu erkennen, dass sich der Grundkörper 8 beim Blasformen an den Flansch 7 des Funktionselementes 3 angelegt hat, wobei eine flächige Anlage des Flansches 7 des Funktionselementes 3 an die Oberfläche des Vorformlings 10 erfolgt. Dadurch, dass das Material des Vorformlings 10 auf eine Temperatur oberhalb der Schmelztemperatur erwärmt ist, erfolgt eine stoffschlüssige Verbindung von Funktionselement 3 und Grundkörper 8. Das Funktionselement 3 ist mit Schweißrippen 15 ausgerüstet, die beim Blasformvorgang anschmelzen und sich mit dem Grundkörper 8 stoffschlüssig und formschlüssig verbinden. Für die formschlüssige Verbindung sind der Grundkörper 8 und das Funktionselement 3 mit einer Formschlussgeometrie 14 versehen. Zur Ausgestaltung der Formschlussgeometrie 14 sind bei der vorliegenden Ausgestaltung in das Funktionselement 3 Durchbrechungen eingebracht, die sich ausgehend von der dem Grundkörper 8 zugewandten Seite in Richtung der anderen Seite erweitern. In die Durchbrechung erstreck sich ein aus dem Grundkörper 8 ausgebildeter und schwalbenschwanzförmig geformter Vorsprung hinein. Durch diese Hinterschnitt-Geometrie ergibt sich eine formschlüssige Verbindung von Grundkörper 8 und Funktionselement 3.

In einer alternativen Ausgestaltung sind Funktionselement 3 und Grundkörper 8 nur formschlüssig verbunden. In einer weiteren alternativen Ausgestaltung sind Funktionselement 3 und Grundkörper 8 nur stoffschlüssig miteinander verbunden.

Fig. 2 kann ferner entnommen werden, dass das Funktionselement 3 durch die Haltevorrichtung 4 lagerichtig in der Blasform 2 gehalten ist, wobei die Haltevorrichtung 4 einen Halter 5 aufweist, der das Funktionselement 3 teilweise aufnimmt. Der Halter 5 weist einen Vorsprung 6 auf, der sich in Längsrichtung in Richtung auf den Vorformling 10 erstreckt. Zu erkennen ist ferner, dass der Flansch 7 des Funktionselementes 3 den Vorsprung 6 des Halters 5 in radialer Richtung überragt. Der Flansch 7 erstreckt sich dementsprechend zwischen der Stirnseite des Halters 5 und dem Vorformling 10 bzw. dem Grundkörper 8.

Das Funktionselement 3 besteht aus thermoplastischem Werkstoff und ist als Spritzgussteil ausgebildet.

Der Vorformling 10 bildet einen Grundkörper 8 mit mindestens einem Strömungskanal 9 aus, wobei das Funktionselement 3 mit dem Strömungskanal 9 strömungsleitend in Verbindung steht. Bei der vorliegenden Ausgestaltung ist das Funktionselement 3 ein Ventil oder ein Sensor. Das Blasformteil 1 bildet eine Anordnung für den Transport von Medien.

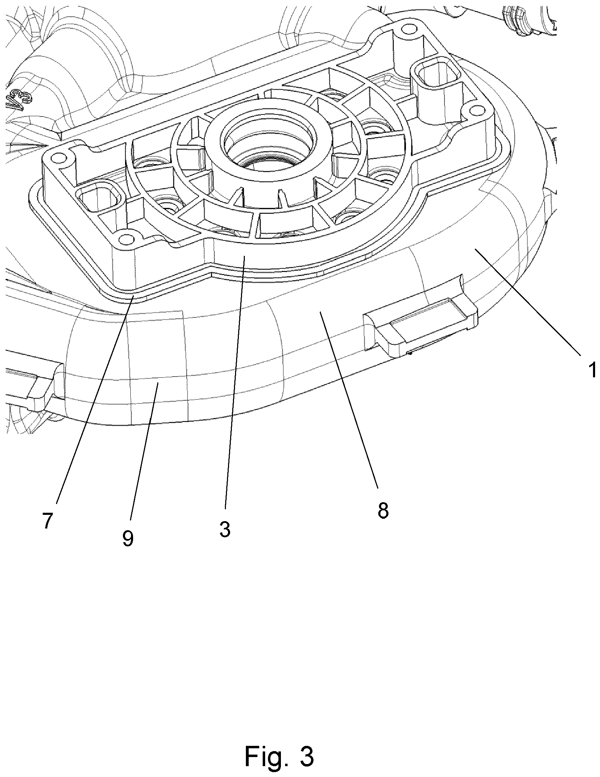

Fig. 3 zeigt das Blasformteil 1, welches als Anordnung für den Transport von Medien ausgebildet ist und einen im Blasformverfahren hergestellten Grundkörper 8 aus thermoplastischem Werkstoff umfasst, in dem wenigstens ein Strömungskanal 9 ausgebildet ist. Das Funktionselement 3 ist stoffschlüssig und formschlüssig mit dem Grundkörper 8 verbunden, wobei das Funktionselement 3 mit dem Strömungskanal 9 strömungsleitend in Verbindung steht. Das Funktionselement 3 weist einen Flansch 7 auf, der an dem Grundkörper 8 anliegt. In einer alternativen Ausgestaltung sind Funktionselement 3 und Grundkörper 8 nur formschlüssig verbunden. In einer weiteren alternativen Ausgestaltung sind Funktionselement 3 und Grundkörper 8 nur stoffschlüssig miteinander verbunden.

Das Blasformteil 1 bildet eine Verteilstruktur für Temperiermedien, wobei das Blasformteil 1 in einem Temperierkreislauf eines Elektrofahrzeugs zum Einsatz gelangt. Über das Blasformteil 1 können Temperiermedien verteilt und zu den zu temperierenden Einrichtungen, beispielsweise den Akkumulatoren, den Elektromotoren, der Leistungselektronik oder den Wärmetauschern der Fahrgastzellentemperierung, geleitet werden.

Bei der vorliegenden Ausgestaltung ist das Funktionselement 3 als Anschlussbauteil ausgebildet und kann der direkten Verbindung des Blasformteils 1 mit weiteren Komponenten des Fahrzeugs dienen. Alternativ kann das Funktionselement 3 auch als Anschlussstutzen ausgebildet sein und der Aufnahme von Schläuchen für die Verbindung von Komponenten mit dem Blasformteil 1 dienen. Ebenso ist denkbar, dass das Funktionselement 3 ein Ventil oder ein Sensor ist.

## Patentansprüche

1. Verfahren zur Herstellung eines Blasformteils (1), umfassend die Schritte:
- Einfügen eines Vorformlings (10) aus thermoplastischem Werkstoff in eine Blasform (2),
- Einfügen eines Funktionselementes (3) in die Blasform (2), wobei das Funktionselement (3) durch eine Haltevorrichtung (4) lagerichtig in der Blasform (2) gehalten ist, wobei die Haltevorrichtung (4) einen Halter (5) aufweist, der das Funktionselement (3) teilweise aufnimmt, wobei der Halter (5) einen Vorsprung (6) aufweist, der sich in Längsrichtung erstreckt, wobei das Funktionselement (3) auf der dem Vorformling (10) zugewandten Seite einen in radialer Richtung verlaufenden Flansch (7) aufweist,
- Schließen der Blasform (2),
- Durchführen des Blasformvorgangs, wobei sich der Vorformling (10) an den Flansch (7) des Funktionselementes (3) anlegt und einen Grundkörper (8) ausbildet.

2. Verfahren nach Anspruch 1, **dadurch gekennzeichnet, dass** sich der Flansch (7) des Funktionselementes (3) an die Oberfläche des Vorformlings (10) anlegt.

3. Verfahren nach Anspruch 1 oder 2, **dadurch gekennzeichnet, dass** sich das Funktionselement (3) stoffschlüssig und/oder formschlüssig mit dem Grundkörper (8) verbindet.

4. Verfahren nach einem der Ansprüche 1 bis 3, **dadurch gekennzeichnet, dass** sich der Flansch (7) des Funktionselementes (3) über die Stirnseite des Vorsprungs (6) des Halters (5) erstreckt.

5. Verfahren nach einem der Ansprüche 1 bis 4, **dadurch gekennzeichnet, dass** das Funktionselement (3) aus thermoplastischem Werkstoff besteht.

6. Verfahren nach einem der Ansprüche 1 bis 5, **dadurch gekennzeichnet, dass** das Funktionselement (3) als Spritzgussteil ausgebildet ist.

7. Verfahren nach einem der Ansprüche 1 bis 6, **dadurch gekennzeichnet, dass** das Blasformteil (1) eine Anordnung für den Transport von Medien ist.

8. Verfahren nach einem der Ansprüche 1 bis 7, **dadurch gekennzeichnet, dass** der Vorformling (10) einen Grundkörper (8) mit mindestens einem Strömungskanal (9) ausbildet, wobei das Funktionselement (3) mit dem Strömungskanal (9) strömungsleitend in Verbindung steht.

9. Verfahren nach einem der Ansprüche 1 bis 8, **dadurch gekennzeichnet, dass** das Funktionselement (3) ein Ventil, eine interne Kanalkreuzung, ein Pumpenanschluss, ein externer Leitungsabgang oder ein Sensoranschluss ist.

10. Blasformteil (1), umfassend einen im Blasformverfahren hergestellten Grundkörper (8) aus thermoplastischem Werkstoff, in dem wenigstens ein Strömungskanal (9) ausgebildet ist und zumindest ein Funktionselement (3), welches stoffschlüssig und/oder formschlüssig mit dem Grundkörper (8) verbunden ist, wobei das Funktionselement (3) mit dem Strömungskanal (9) strömungsleitend verbunden ist, wobei das Funktionselement (3) einen Flansch (7) aufweist, der an dem Grundkörper (8) anliegt.

11. Blasformteil nach Anspruch 10, **dadurch gekennzeichnet, dass** das Funktionselement (3) einen Axialflansch aufweist.

12. Blasformteil nach Anspruch 10 oder 11, **dadurch gekennzeichnet, dass** sich der Flansch (7) in radialer Richtung erstreckt.

13. Blasformteil nach einem der Ansprüche 10 bis 12, **dadurch gekennzeichnet, dass** das Funktionselement (3) als Spritzgussteil aus thermoplastischem Werkstoff ausgebildet ist.

14. Blasformteil nach einem der Ansprüche 10 bis 13, **dadurch gekennzeichnet, dass** das Blasformteil (1) eine Anordnung für den Transport von Medien bildet.
